# EUROPÄISCHE PATENTSCHRIFT

(11) **EP 4 160 245 B1**
(45) Veröffentlichungstag und Bekanntmachung des Hinweises auf die Patenterteilung: **22.07.2026**
(21) Anmeldenummer: 22195353.2
(22) Anmeldetag: 13.09.2022
(51) Int. Cl.: G01S 3/04, G01S 5/02

(54) **VERFAHREN UND VORRICHTUNG ZUM LOKALISIEREN EINER SIGNALQUELLE**
METHOD AND APPARATUS FOR LOCATING A SIGNAL SOURCE
PROCÉDÉ ET DISPOSITIF DE LOCALISATION D'UNE SOURCE DE SIGNAL

(30) Priorität: 27.09.2021 DE 102021124858
(43) Veröffentlichungstag der Anmeldung: 05.04.2023
(73) Patentinhaber: Airbus Defence and Space GmbH, 82024 Taufkirchen (DE)
(72) Erfinder: PODOLSKI, Roman, 82024 Taufkirchen (DE); KATSILIERIS, Fotios, 82024 Taufkirchen (DE); PEREZ ACAL, Antonio, 82024 Taufkirchen (DE); SIEDE, Markus, 82024 Taufkirchen (DE)
(74) Vertreter: LKGLOBAL Partnerschaftsgesellschaft mbB

(56) Entgegenhaltungen:
- US-A- 5 045 860
- US-A1- 2010 138 184
- US-A1- 2021 212 015

## Beschreibung

### Technisches Gebiet

Die vorliegende Beschreibung betrifft das Gebiet der Lokalisierung. Insbesondere betrifft die vorliegende Beschreibung ein Verfahren zum Lokalisieren einer Signalquelle, eine Lokalisierungsvorrichtung und ein Transportmittel.

### Technischer Hintergrund

Der Fortschritt führt zu Vereinfachungen und Verbesserungen des täglichen Lebens der Menschen. Sensoren, die sehr präzise arbeiten, unterstützen Menschen in vielen Bereichen des Lebens und nehmen ihnen unliebsame Arbeiten ab.

Die Technik hat auch dazu beigetragen, dass sich die Sicherheit erhöht. Insbesondere im Bereich Transport und Verkehr übernehmen technische Geräte viele Aufgaben teilweise besser und zuverlässiger, als dies der Mensch mit seinen Sinnesorganen kann.

Im Bereich der Navigation und Lokalisierung hat sich das Global Positioning System (GPS) zur Bestimmung der Eigenposition sehr verbreitet. Dabei werden Signale empfangen, aus denen sich die eigene Position errechnen lässt. Hierbei ist man jedoch auf die Bereitstellung von Signalen von externen Betreibern abhängig.

Im Bereich der Fremdortung, d.h. für das Auffinden von Hindernissen beispielsweise, werden Radar, Lidar und/oder Ultraschallsensoren eingesetzt. Diese setzen jedoch wieder eine aktive Signalaussendung voraus, beispielsweise einen elektromagnetischen und/oder einen akustischen Puls, der ausgesendet und dessen Reflexion gemessen wird.

Es kann jedoch auch von Interesse sein, ein fremdes Objekt zu orten, ohne selbst ein aktives Signal aussenden zu müssen, da man beispielsweise selbst nicht ortbar sein möchte oder, wie im Bereich der Betrachtung der Hintergrundstrahlung im All, kein ausreichend leistungsfähiges Signal verfügbar ist, um solch weite Entfernungen zu erfassen.

Man ist in solchen Situationen darauf angewiesen, Signalquellen, sog. Emitter, zu orten. Dabei wird ein aktives Signal der Signalquelle geortet. Allerdings lässt sich durch das Auswerten des Signals nur eine sehr ungenaue Ortung erzielen.

Die Druckschrift "Analysis of single-platform passive emitter location with terrain data" von Mark L. Fowler in IEEE Transactions on Aerospace and Electronic Systems, Vol. 37(2001), No 2, April 2011, Seite 495 - 507, zeigt, dass durch das Bereitstellen von Höhenformationen, die Rechenperformance zur Lagebestimmung eines Emitters beeinflusst werden kann.

Die Druckschrift US 2004/0164902 A1 betrifft ein Richtungsauffindungsverfahren unter Verwendung eines Wahrscheinlichkeit basierten Abbildens.

Die Druckschrift US2010/0138184 A1 betrifft ein Wahrscheinlichkeits-Abbildungssystem zum Lokalisieren eines Emitters.

Die US 5 045 860 A beschreibt ein Verfahren und System zur Zielortung. Dabei erfasst jede einer Vielzahl von Messstationen, z. B. HFDF-Sensoren, einen Nennwert einer vorbestimmten Messgröße, wie z. B. eine Peilung, unterschiedliche Ankunftszeiten usw., die den Standort eines potenziellen Ziels in einem Zielgebiet mit dem Standort der jeweiligen Messstation in Beziehung setzt. Fehlermodelle, die jeder Messstation zugeordnet sind, werden zusammen mit der nominalen Messgröße für jede Messstation an einen zentralen Datensammler übertragen. Ein zentraler Prozessor empfängt die gesammelten Daten und weist einen Monitor an, eine Darstellung des Zielgebiets anzuzeigen. Es wird auch ein Verfahren zur Schätzung der Position des Ziels auf der Grundlage der nominalen Messungen der Ortsvariablen sowie der Fehlermodelle für jede Messstation beschrieben. Das Zielgebiet wird in ein Raster von Zielgebietssegmenten unterteilt. Der Prozessor bestimmt dann eine Teilwahrscheinlichkeit, dass das Ziel in jedem gegebenen Zielgebietssegment liegt, basierend auf der nominalen Messung und dem Fehlermodell für jede Messstation unabhängig. Auf der Grundlage der Teilwahrscheinlichkeiten für jede Messstation wird dann ein zusammengesetzter Wahrscheinlichkeitswert berechnet, der die Wahrscheinlichkeit darstellt, dass das Ziel in jedem gegebenen Zielgebietssegment liegt. Der Prozessor weist dann die Anzeige an, das Zielgebiet als Regionen mit einer Wahrscheinlichkeit für den Standort des Ziels darzustellen.

### Beschreibung

Es kann als Aufgabe betrachtet werden, eine effektive Lokalisierung zu ermöglichen.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß einem Aspekt der Erfindung wird ein Verfahren zum Lokalisieren einer Signalquelle bereitgestellt, wobei die Signalquelle ein Signal aussendet. Als ein Signal kann eine elektromagnetische Welle, eine Wärmestrahlung, ein optisches Signal und/oder eine akustische Welle aufgefasst werden. Das Verfahren sieht ein Bestimmen einer ortsabhängigen Peilmessung einer Signalquelle vor.

Ferner erfolgen gemäß der Erfindung ein Bestimmen einer Typisierung der Signalquelle durch Auswerten eines von der Signalquelle empfangenden Signals und Zuordnen des empfangenen Signals zu einem bestimmten Emitter-Typ aufgrund von Signalinformationen des empfangenen Signals. Die Typisierung gibt einen Typ der Signalquelle an. Ferner erfolgt gemäß der Erfindung ein Ermitteln einer ortsabhängigen Aufenthaltswahrscheinlichkeit der Signalquelle in Abhängigkeit von der bestimmten Typisierung der Signalquelle.

In einem Beispiel wird die ortsabhängige Aufenthaltswahrscheinlichkeit gemäß der verfügbaren a-priori Information ermittelt. Beispiele solcher a-priori Informationen können signalabhängige Radius-Angaben, systembedingte Einschränkungen, welche einen Bezug zu der Signalquelle haben, eine Bedrohungs-Aufenthalts-Wahrscheinlichkeitsfunktion, eine Abschuss-Aufenthalts-Wahrscheinlichkeitsfunktion und/oder eine Höhen- Aufenthalts-Wahrscheinlichkeitsfunktion sein.

Gemäß der Erfindung wird die ortsabhängige Peilmessung der Signalquelle mit der ortsabhängigen Aufenthaltswahrscheinlichkeit überlagert und es wird dann eine aus dem Überlagern ermittelte Position der Signalquelle bereitgestellt. Dies mag bedeuten, dass schwach ausgeprägte Peilmessungen dadurch verstärkt werden können, dass anderweitig ermittelte a-priori Informationen ausgenutzt werden, um die Genauigkeit einer Positionsbestimmung zu erhöhen. Sämtliche verfügbaren Informationen können auf diese Weise verdichtet werden, so dass sich einerseits die Bestimmungsgeschwindigkeit erhöht und insbesondere eine benötigte Rechenleistung erniedrigt.

In einem Beispiel mag es möglich sein, eine optische Aufklärung in einem Gebiet mit einer hohen Wahrscheinlichkeit durchzuführen und daraus eine Peilung zu erhalten. Für die optische Aufklärung kann ein Verfahren der Bildverarbeitung genutzt werden, welches beispielsweise typische Umrisse und/oder Strukturen eines Emitters und/oder einer zugehörigen Einrichtung erkennt. Die Auswertung kann beispielsweise in einer Photographie und/oder einem Radarbild durchgeführt werden.

Falls ein passives und/oder aktives Signal einer Signalquelle und/oder eines Emitters geortet werden soll, mag es vorkommen, dass sich durch das Auswerten des Signals nur eine sehr ungenaue Ortung und/oder Peilung erzielen lässt.

Die ungenaue Ortung mag dadurch verursacht sein, dass sich die Zeit nicht genau ermitteln lässt, die das Signal beispielsweise von der Signalquelle zu einer Lokalisiervorrichtung und insbesondere zu einem Signalempfänger benötigt. Durch eine genaue Zeiterfassung mag sich eine genaue Ortung ergeben.

Durch eine genaue Zeiterfassung mag sich die Genauigkeit der Peilung erhöhen lassen. Die Genauigkeit der Zeiterfassung mag sich jedoch nur innerhalb bestimmter Randbedingungen erhöhen lassen.

Eine hohe Genauigkeit der Zeiterfassung mag in Verbindung mit dem Berücksichtigen einer ortsabhängigen Aufenthaltswahrscheinlichkeit zu einer schnellen und akkuraten Positionsermittlung der Signalquelle beitragen.

Denn die ermittelte Information mag über die Zeit ausgewertet werden müssen, um genaue Ortungen zu erlauben. Die Zeit ist jedoch ein kritischer Faktor. Im Normalfall soll die Position des Signalemitters innerhalb von wenigen Sekunden ermittelt werden, da ein eintreffendes Radarsignal bedeuteten kann, dass die eigene Position nun bekannt ist.

Im Allgemeinen mag das Berücksichtigen der a-priori Aufenthaltswahrscheinlichkeit einer Signalquelle zu einer kurzen Zeitspanne beitragen, bis eine akkurate Ortung erfolgen kann.

Gemäß einer Ausführungsform weist das Ermitteln einer ortsabhängigen Aufenthaltswahrscheinlichkeit in Abhängigkeit von der bestimmten Typisierung der Signalquelle zumindest ein a-priori Ermittlungsverfahren auf, ausgewählt aus der Gruppe von a-priori Ermittlungsverfahren, bestehend aus dem Auslesen von Metainformation, dem Auswerten einer Geo-Information, dem Bereitstellen einer typisierten Landkarte, dem Ermitteln von Points of Interests, dem Auswerten von Bilddaten, dem Auswerten von Bewegungsdaten, dem Anwenden von Methoden der Bildverarbeitung, dem Anwenden einer Datenfusion und dem Auswerten von Ausbreitungsbedingungen des Signals.

So können beispielsweise durch das Auslesen von Metainformation, beispielsweise aus einer Datenbank und/oder aus einer Karte, Elevationen und/oder Erhebungen ermittelt werden, Wahrscheinlichkeitsverteilungen, insbesondere geographische oder ortsabhängige Wahrscheinlichkeitsverteilungen, Positionsverteilungen und/oder Geo-Koordinatenverteilungen für vorgebbare Objekte aufbereitet werden und/oder Overlaykarten erzeugt werden. Eine Overlaykarte mag einer anderen Karte überlagert werden, um vorgebbare Kriterien hervorzuheben. Eine bildliche Darstellung einer ortsabhängigen Wahrscheinlichkeitsverteilung für die Auftretenswahrscheinlichkeit eines vorgebbaren Objekts oder eine bildliche ortsabhängige Aufenthaltswahrscheinlichkeit kann beispielsweise die Überlagerung sämtlicher vorhandener Informationen in einer grafischen Visualisierung zusammenfassen und verdeutlichen.

Betrachtet man beispielsweise Daten einer Landkarte, so können zu jeder Geo-Koordinate auch Metadaten hinterlegt sein. Diese Metadaten können beispielsweise ein bestimmtes Element und/oder einen Point of Interest, wie ein Gebäude und/oder eine Straße genauer definieren als lediglich mit den Geo-Koordinaten. Es kann beispielsweise auch der Belagtyp einer Straße hinterlegt sein. Wenn beispielsweise für eine Geo-Koordinate festgestellt wird, dass der Belagtyp an dieser Stelle Tarmac aufweist, kann hieraus abgeleitet werden, dass es sich um eine befestigte Straße handelt, auf der sich ein straßengebundenes Fahrzeug befinden kann, während es eher unwahrscheinlich ist, dass sich ein straßengebundenes Fahrzeug an einer Geo-Koordinate befindet, die als Gewässer gekennzeichnet ist.

Es kann aber auch eine Geo-Information wie die Erhebung einer Landschaft ausgewertet werden, wobei die Geo-Information ebenfalls als eine Metainformation aufgefasst werden kann. Das Auswerten der Geo-Information mag in einem Ausschlussverfahren Geo-Informationen ausschließen, die für den erkannten Typ der Signalquelle nicht in Frage kommen.

Die für solche Ausschlussverfahren anzuwendenden Regeln können ebenfalls als ortsabhängige Aufenthaltswahrscheinlichkeit bereitgestellt werden.

Der Typ der Signalquelle kann auch Angaben über den Typ eines mit der Signalquelle assoziierten Systems umfassen. Oftmals mag sich ein mit der Signalquelle assoziiertes System in der Nähe der Signalquelle befinden. Beispielsweise mag eine Signalquelle mit einem Surface-to-Air Missile (SAM) System assoziiert sein, von dem bekannt sein mag, dass es im Wesentlichen nur oberhalb einer bestimmten Erhebung über dem Meeresspiegel zum Einsatz kommen kann. Daher mag eine hohe Effizienz erreichbar sein, wenn von der Existenz von Signalquellen in der Nähe von Landmarken mit a-priori bekanntem militärischen und/oder strategischem Wert ausgegangen wird und diese mit einer entsprechend hohen ortsabhängigen Aufenthaltswahrscheinlichkeit bewertet sind.

Solche besonders zu betrachtende Orte können in einem Beispiel als Gruppen von Orten und/oder als Set von Orten als Ergebnis der Typisierung der Signalquelle ermittelt werden. In einem anderen Beispiel können diese aber auch bereits vor der Typisierung der Signalquelle zur Ausrichtung einer Peilmessung herangezogen werden. Beispiele für Orte mit besonderem strategischem Wert können Erhebungen über dem Meeresspiegel, das Feedback von Piloten aus Aufklärungsflügen, Flughäfen, Brücken und/oder vorselektierte Landmarken sein. In anderen Worten mögen diese besonders zu betrachtende Orte durch Koordinaten gekennzeichnete Bereiche sein, für die eine hohe Wahrscheinlichkeit gegeben ist, mit einer gesuchten Signalquelle in Verbindung zu stehen, wobei sich diese örtliche und durch den strategischen Wert ausgezeichnete Information aus einer Datenbank von vorausgehenden Missionen ergeben kann und/oder von einem neuronalen Netzwerk gelernt werden kann.

Es kann so beispielsweise aus der Vergangenheit gelernt werden, dass Flughäfen Orte mit besonderem strategischem Wert sind, da dort oftmals in der Vergangenheit Signalquellen aufgefunden worden sind. In anderen Worten mag das Aufkommen von SAMs in der Nähe von Landmarken mit militärischem Nutzen, wie z.B. Flugplätzen, Landesgrenzen, Versorgungslinien etc., hoch und/oder wahrscheinlich sein.

Weitere Informationen können aus dem Auswerten von Bilddaten gewonnen werden, wie beispielsweise Satellitenfotos, Aufklärungsfotos, oder entsprechenden Videos. Das Auswerten von Bilddaten und das Anwenden von Methoden der Bildverarbeitung mag beispielsweise herangezogen werden, wenn von einem Gelände oder Terrain keine Geo-Koordinaten mit Metadaten vorliegen, beispielsweise weil eine Straße erst kürzlich errichtet worden ist.

Auch können Bewegungsdaten Hinweise auf den Aufenthaltsort einer Signalquelle oder eines Emitters geben, insbesondere, wenn diese / dieser auf einem Fahrzeug montiert ist.

Im militärischen Bereich können auch taktische Informationen genutzt werden, um eine bestimmte Interessengewichtung von Bereichen, Orten und/oder Landmarken in einer Landkarte hervorzuheben. Diese Interessengewichtung kann beispielsweise abhängig von einer bestimmten gestellten Aufgabe sein, insbesondere wenn eine ganz spezifisch definierte Signalquelle gefunden werden soll. Für solche unterschiedlichen Einsatzszenarien können unterschiedlich gewichtete Karten bereitgestellt werden.

In einem Beispiel kann es sich bei dem Typ der Signalquelle und insbesondere bei dem Typ des mit der Signalquelle assoziierten Systems um einen Panzer, ein Schiff oder eine stationäre Einrichtung handeln. Der Typ der Signalquelle mag insbesondere durch das Auffinden eines speziellen Radars, dem Erkennen einer bestimmten Signal-Charakteristik, einer Pulsfrequenz, einer Pulsphasenmodulation, einer Frequenzmodulation, einer Signalstärke, einer Puls-Codierung und/oder einer Impulsfolge-Frequenz festgelegt werden.

Die Gewichtung mag sich als eine bildliche ortsabhängige Aufenthaltswahrscheinlichkeit und/oder als eine entsprechende Overlaykarte darstellen lassen, in der Orte mit einem besonderen Interesse besonders gewichtet und/oder farblich gekennzeichnet sind. Soll beispielsweise eine Signalquelle in einem Gebirgszug aufgefunden werden, so sind besonders gewichtete Orte hervorgehoben, beispielsweise besonders ausgestaltete Plateaus über einer Mindesthöhe. Die bildlichen ortsabhängigen Aufenthaltswahrscheinlichkeiten geben dabei Wahrscheinlichkeiten für den Aufenthalt eines bestimmten Typs einer Signalquelle in einem bestimmten Bereich an, wobei der Bereich wiederum durch bestimmte geographische Angaben wie Höhenangaben oder andere Metainformationen angegeben werden kann.

Zur a-priori Auswertung kann beispielsweise die Information über einen Sensor, eine Surface-to-Air Missile (SAM) Anlage, ein Satellitenfoto, eine Auswertung eines Remote Carrier (RC) und/oder eine Auswertung eines High-Altitude Pseudo-Satellite (HAPS) genutzt werden.

Bei einem RC mag es sich um einen unbemannten und/oder ferngesteuerten Sensor handeln. Ein RC mag ein sich in einer Entfernung von einer Zentrale befindlicher Sensor sein, welcher an seinem Ort vorhandene Umgebungsdaten an die Zentrale und/oder eine zentrale Lokalisierungsvorrichtung liefert. Die Signale und/oder Erkenntnisse von unterschiedlichen Remote-Sensoren und/oder RCs an unterschiedlichen geographischen Orten können ebenfalls in die Erstellung einer bildlichen Darstellung einer ortsabhängigen Aufenthaltswahrscheinlichkeit einfließen und zu einer Gesamtinformation verdichtet werden. Ein Remote-Sensor und/oder RC mag Teil einer Lokalisierungsvorrichtung sein, so dass sich eine Vielzahl von Lokalisierungsvorrichtungen zu einem Verbund einer Lokalisierungsvorrichtung zusammenfassen lässt. Ein RC kann auch als Plattform bezeichnet werden, auf der ein Sensor angebracht ist.

Es mag also vorgesehen sein, Informationen der unterschiedlichsten Art in ein einheitliches Format zu verdichten, um sie vergleichbar zu machen und sie dann mit gewonnenen Peildaten zusammen zu führen. Auf diese Art und Weise mag die Genauigkeit einer mittels Peilung durchgeführten Positionsbestimmung erhöht werden. Außerdem mag die Zeit für die Positionsbestimmung gering sein und im Bereich von wenigen Sekunden liegen.

Es können folglich ortsabhängige Bereiche auf einer durch Ortsangaben bestimmten Karte ermittelt werden, an denen RF-Emitter (Radio Frequency) mit einer hohen Genauigkeit lokalisiert sind. Die für die Auswertung verwendeten a-priori Daten können zeitnah zu der Positionsbestimmung ermittelt werden. In einem Beispiel können die a-priori Daten im Wesentlichen parallel zu der Positionsbestimmung ermittelt werden. Die a-priori Daten können in einem anderen Beispiel aber auch bereits zeitlich vor der Positionsbestimmung ermittelt worden sein.

Insbesondere kann solch eine a-priori Information als bildliche ortsabhängige Aufenthaltswahrscheinlichkeit dargestellt werden. Diese bildliche ortsabhängige Aufenthaltswahrscheinlichkeitsdarstellung kann kontinuierlich verfeinert und an neue Erkenntnisse angepasst werden. Hierzu kann ein neuronales Netz trainiert werden.

Die Ermittlung der a-priori Daten und die Peilung mögen im Wesentlichen unabhängig voneinander erfolgen.

Die bildliche ortsabhängige Aufenthaltswahrscheinlichkeitsdarstellung mag weiter mit Daten ergänzt und/oder überlagert werden, die von Plattform übergreifenden Sensoren ermittelt worden sind.

So mag sich eine schnelle und genaue Fusion der Sensordaten, beispielsweise aus Sensoren von unbemannten Flurzeugen, und/oder der RC Daten, also der von Sensoren auf einem RC gewonnenen Daten, erreichen lassen. Außerdem kann eine schnelle und genaue Emitter Lokalisierung erreicht werden. Aus einer bildlichen ortsabhängigen Aufenthaltswahrscheinlichkeitsdarstellung mag sich eine Ziel-orientierte Erkennung einer Emitter-Position ableiten lassen. Dabei kann der Emitter als das Ziel aufgefasst werden.

Die oftmals bei einer Ortung entstehenden Geister-Züge, Ghost Tracks und/oder Geister-Verläufe, von nicht eindeutig zuordenbaren Signalquellen und/oder von Signalquellen, die noch nicht mit einer ausreichend hohen Wahrscheinlichkeit lokalisiert sind, mögen reduziert und/oder sogar ganz vermieden werden.

Gemäß einer weiteren Ausführungsformweist das Bestimmen einer Typisierung der Signalquelle das Auswerten einer Emitter-Datenbank und/oder eines Bildmaterials auf, wie beispielsweise eines Fotos.

Bei der Typisierung und/oder Kategorisierung eines Emitters kann beispielsweise das Empfangene Signal ausgewertet und einem bestimmten Emitter-Typ zugeordnet werden. Sie kann aber auch manuell eingegeben werden, beispielsweise mittels einer Eingabevorrichtung. Eine manuelle Eingabe kann genutzt werden, wenn es beispielsweise als eine Vorgabe einer Mission gilt, einen bestimmten Typ von Emitter und/oder ein zugehöriges Fahrzeug aufzufinden.

Aus dem Typ des Emitters können Rückschlüsse auf die ortsabhängigen Aufenthaltswahrscheinlichkeiten getroffen werden und so kann eine typspezifische bildliche ortsabhängige Aufenthaltswahrscheinlichkeitsdarstellung erzeugt werden. Diese Darstellung mag mit Hilfe der Metainformationen einer Landkarte erstellt werden und in einem Beispiel als Overlaykarte für die Landkarte bereitgestellt werden.

Gemäß einer weiteren Ausführungsformweist die ortsabhängige Peilmessung das Anwenden eines Peilverfahrens auf, ausgewählt aus der Gruppe von Peilverfahren bestehend aus einem Time of Arrival (TOA) Verfahren, einem Angle of Arrival (AOA) Verfahren und einem Received Signal Strength (RSS) Verfahren. Es können sämtliche Methoden genutzt werden, aus denen sich eine richtungsabhängige Peilung und nicht nur eine Ortsbestimmung ableiten lässt.

Hierbei können beispielsweise Array-Antennen eingesetzt werden, die eine Peilung ermöglichen. Array-Antennen erlauben auch entsprechende Winkelmessungen des Peilsignals, indem entsprechende Phasenverschiebungen zwischen den einzelnen Arrays eingestellt werden. Diese Winkelmessungen können eine Richtung des Ziels angeben.

Das Ergebnis der einzelnen Messungen kann jedoch oftmals sehr ungenau sein, und beispielsweise im Wesentlichen nur eine grobe Richtungs- und/oder Aufenthaltsschätzung ergeben. Somit kann die Auswertung der a-priori Daten als Unterstützung für die Messungen eingesetzt werden.

Gemäß einer weiteren Ausführungsformwerden Ergebnisse der ortsabhängigen Peilmessung, Ergebnisse der Ermittlung der ortsabhängigen Aufenthaltswahrscheinlichkeit der Signalquelle und/oder die ermittelte Position versendet und/oder empfangen.

Durch den Austausch von Angaben zur ermittelten Position kann ein Abgleich von verschiedenen Peileinrichtungen und/oder von verschiedenen Lokalisierungsvorrichtungen erfolgen.

Es mögen sich Signale des Emitters aus verschiedenen Sensorpositionen empfangen lassen und aus den empfangenen Daten mag dann schneller beispielsweise eine Triangulation erstellt werden können, um die Position des Emitters zu ermitteln. Dasselbe Signal kann von unterschiedlich positionierten Sensoren von Remote Carriern (RC) unter unterschiedlichen Blickwinkeln aufgenommen werden.

Gemäß einer weiteren Ausführungsformfindet das Bestimmen einer ortsabhängigen Peilmessung, das Bestimmen einer Typisierung der Signalquelle und das Ermitteln einer ortsabhängigen Aufenthaltswahrscheinlichkeit der Signalquelle während einer Bewegung statt.

Alternativ zu und/oder in Ergänzung zu der Aufnahme an unterschiedlichen Positionen mit unterschiedlichen Sensoren, welche auf unterschiedlichen Trägersystemen fest montiert sein können, kann sich das Trägersystem, auf dem der Sensor montiert ist, auch bewegen und an unterschiedlichen Positionen Aufnahmen, Peilungen, Wahrscheinlichkeitsermittlungen, Überlagerungen von gewonnenen Daten und/oder Positionsermittlungen durchführen. Als Trägersystem können beispielsweise RCs, Ballons, Satelliten, aber auch Masten zum Einsatz kommen, auf denen die jeweiligen Sensoren angebracht sind. Aus den zeitlich beabstandeten Resultaten der unterschiedlichen Sensoren an den unterschiedlichen Orten können sich dann die Informationen zur Positionsbestimmung verfeinern lassen. Bewegte und/oder feste Sensoren, insbesondere deren Daten, können beliebig kombiniert werden.

Gemäß einer weiteren Ausführungsform wird das Verfahren in einer Wiederholungsschleife unter Verwendung vorausgehender Ergebnisse ausgeführt.

Die Wiederholungsschleife ermöglicht es, bereits gewonnene Informationen in die nachfolgende Auswertung als Feedback einfließen zu lassen. Es kann sich durch die Wiederholung auch ein Lern-Algorithmus realisieren lassen.

Gemäß noch einem Aspekt wird ein Programmelement bereitgestellt, welches, wenn es von einem Prozessor ausgeführt wird, das Verfahren zum Lokalisieren einer Signalquelle ausführt.

Gemäß noch einem anderen Aspekt der vorliegenden Erfindung wird ein computerlesbares Speichermedium bereitgestellt, in dem ein Programm gespeichert ist, welches, wenn es von einem Prozessor ausgeführt wird, das Verfahren zum Lokalisieren einer Signalquelle ausführt.

Als ein computerlesbares Speichermedium mag eine Floppy Disc beispielsweise 5' 1/4 oder 3' 1/2, eine CD (Compact Disc), eine DVD (Digital Versatile Disc), eine Mini Disc, eine Kassette, eine Festplatte, ein USB (Universal Serial Bus) Speichergerät, ein RAM (Random Access Memory), ein ROM (Read Only Memory) oder ein EPROM (Erasable Programmable Read Only Memory) genutzt werden. Als Speichermedium kann auch ein ASIC (application-specific integrated circuit) oder ein FPGA (field-programmable gate array) genutzt werden sowie eine SSD (Solid-State-Drive) Technologie oder ein Flash-basiertes Speichermedium. Ebenso kann als Speichermedium ein Web-Server oder eine Cloud genutzt werden. Als ein computerlesbares Speichermedium mag auch ein Kommunikationsnetz angesehen werden, wie zum Beispiel das Internet, welches das Herunterladen eines Programmcodes zulassen mag. Es kann eine funkbasierte Netzwerktechnologie und/oder eine kabelgebundene Netzwerktechnologie genutzt werden.

Gemäß einem anderen Aspekt der Erfindung wird eine Lokalisierungsvorrichtung zum Lokalisieren einer Signalquelle geschaffen, aufweisend eine Peileinrichtung, eine Typisiereinrichtung, eine a-priori Aufenthaltswahrscheinlichkeits-Bestimmungseinrichtung und eine Auswerteeinrichtung.

Die Peileinrichtung ist zum Bestimmen einer ortsabhängigen Peilmessung einer Signalquelle eingerichtet und die Typisiereinrichtung ist zum Bestimmen einer Typisierung der Signalquelle durch Auswerten eines von der Signalquelle empfangenen Signals und Zuordnen des empfangenen Signals zu einem bestimmten Emitter-Typ aufgrund von Signalinformationen des empfangenen Signals eingerichtet. Die Typisierung gibt einen Typ der Signalquelle an.

Die a-priori Aufenthaltswahrscheinlichkeits-Bestimmungseinrichtung ist für das Ermitteln einer ortsabhängigen Aufenthaltswahrscheinlichkeit der Signalquelle in Abhängigkeit von der bestimmten Typisierung der Signalquelle eingerichtet.

Die Auswerteeinrichtung ist zum Überlagern der ortsabhängigen Peilmessung der Signalquelle mit der ortsabhängigen Aufenthaltswahrscheinlichkeit und zum Bereitstellen einer aus dem Überlagern ermittelten Position der Signalquelle eingerichtet.

Gemäß einem anderen Aspekt der Erfindung wird ein Transportmittel mit einer Lokalisierungsvorrichtung beschrieben. Bei dem Transportmittel kann es sich um eine Landfahrzeug, ein Luftfahrzeug, ein Flugzeug und/oder um ein Wasserfahrzeug handeln.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine Lokalisierungsvorrichtung zum Lokalisieren einer Signalquelle gemäß einem Ausführungsbeispiel.
- Fig. 2: eine bildliche ortsabhängige Aufenthaltswahrscheinlichkeitsverteilung gemäß einem Ausführungsbeispiel.
- Fig. 3: eine Wahrscheinlichkeitsverteilungsfunktion um eine Lokalisierungsvorrichtung herum gemäß einem Ausführungsbeispiel.
- Fig. 4: eine Draufsicht auf einen Gebirgszug und eine Lokalisierungsvorrichtung gemäß einem Ausführungsbeispiel.
- Fig. 5: ein Flussdiagramm für ein Verfahren zum Lokalisieren einer Signalquelle gemäß einem Ausführungsbeispiel.

Detaillierte Beschreibung von Ausführungsbeispielen.

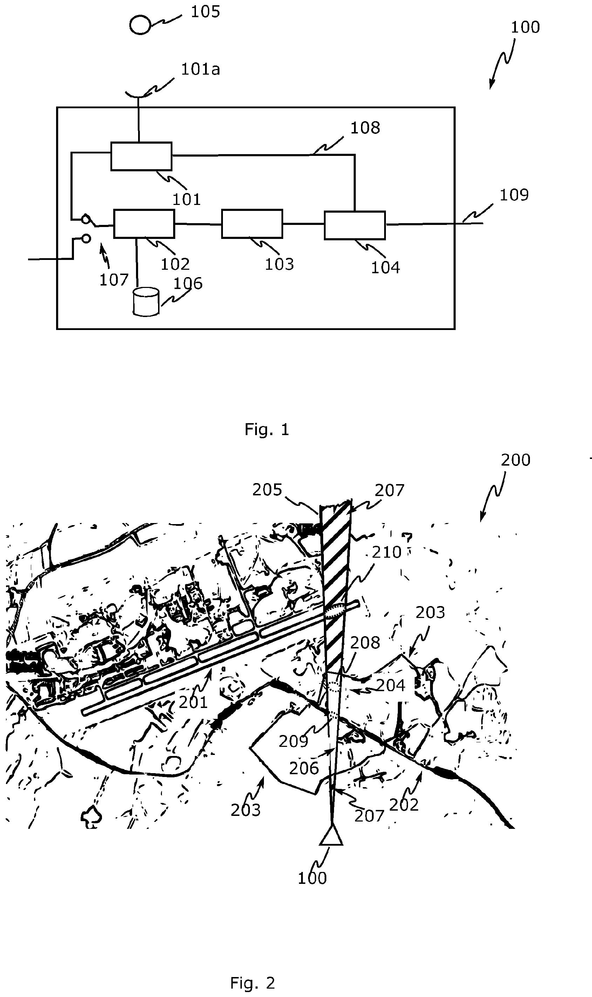

Fig. 1 zeigt eine Lokalisierungsvorrichtung 100 zum Lokalisieren einer Signalquelle gemäß einem Ausführungsbeispiel.

Die Lokalisierungsvorrichtung 100 weist eine Peileinrichtung 101, eine Typisiereinrichtung 102, eine a-priori Aufenthaltswahrscheinlichkeits-Bestimmungseinrichtung 103 und eine Auswerteeinrichtung 104 auf.

Die Peileinrichtung 101 ist zum Bestimmen einer ortsabhängigen Peilmessung einer Signalquelle 105 eingerichtet und weist in einem Beispiel eine Antenne 101a auf. Hierdurch kann eine im Wesentlichen grobe Positionsbestimmung der Signalquelle 105 erfolgen. Beispielsweise mag es sich bei der Antenne 101a um eine Array Antenne handeln, die einen Winkel bestimmen kann, unter dem sie die Signalquelle 105 sieht.

Die Typisiereinrichtung 102 ist zum Empfangen einer Typisierung der Signalquelle eingerichtet. Mittels Schalter 107 oder Auswahleinrichtung 107 kann eingestellt werden, ob eine externe Typisierungsvorgabe erfolgen soll, bei der beispielsweise ein Aufklärungsdatensatz und/oder Missionsdaten eingegeben werden können, und/oder bei der eingegeben werden kann, welcher Typ von Signalquelle 105 oder Emitter 105 aufgefunden werden soll.

In einer anderen Schalterstellung des Schalters 107, ist die Typisiereinrichtung 102 direkt mit der Peileinrichtung 101 verbunden und die Peileinrichtung liefert eine Information über den Typ der Signalquelle 105. Der Typ der Signalquelle 105 kann beispielsweise aus der Art des Empfangssignals, einer Modulation, einer Kennung, eines verwendeten Protokolls, einer Signal-Charakteristik, einer Pulsfrequenz, einer Pulsphasenmodulation, einer Frequenzmodulation, einer Signalstärke, einer Puls-Codierung, einer Impulsfolge-Frequenz und/oder eines bestimmten Frequenzbandes ermittelt werden.

In noch einer Schalterstellung des Schalters 107 können sowohl interne Informationen der Peileinrichtung 101 als auch externe Informationen an die Typisiereinrichtung 102 weitergegeben werden.

Sowohl die internen als auch die externen Informationen können von der Typisiereinrichtung 102 verarbeitet werden, um einen Typ der Signalquelle 105 und weitere Angaben zur Aufenthaltswahrscheinlichkeit zu analysieren, um zu einer Wahrscheinlichkeitsaussage über den Aufenthaltsort der Signalquelle 105 zu kommen.

Zum Empfangen der Typisierung der Signalquelle 105 ist die Typisiereinrichtung 102 mit einer Datenbank 106 verbunden, in der verschiedene Typ Zuordnungen, wie beispielsweise der Art des Empfangssignals, der verwendeten Modulation, der Kennung, des verwendeten Protokolls und/oder des bestimmten Frequenzbandes zu Emitter Typen gespeichert sind. Ebenso können Höheinformationen gespeichert sein, in denen die Emitter 105 eines bestimmten Typs eingesetzt werden. Auch können mit einem bestimmten Emitter Typ assoziierte Systeme und deren Eigenschaften gespeichert sein. Die Typisiereinrichtung 102 kann ein neuronales Netz aufweisen, welches es erlaubt aus bereits verarbeiteter Information zu lernen. So können vorausgehende Erkenntnisse bei der Bestimmung der Emitter Typen und deren assoziierte Systeme herangezogen und verfeinert werden.

Die a-priori Aufenthaltswahrscheinlichkeits-Bestimmungseinrichtung 103 kann eine ortsabhängige Aufenthaltswahrscheinlichkeit der Signalquelle in Abhängigkeit von der empfangenen Typisierung der Signalquelle 105 ermitteln. Auch die a-priori Aufenthaltswahrscheinlichkeits-Bestimmungseinrichtung 103 kann ein neuronales Netz aufweisen, welches es erlaubt aus bereits verarbeiteter Information zu lernen. So können vorausgehende Erkenntnisse bei der Bestimmung der Aufenthaltswahrscheinlichkeit herangezogen und verfeinert werden.

Die Auswerteeinrichtung 104 ist zum Überlagern der ortsabhängigen Peilmessung der Signalquelle, welche über die Verbindung 108 bereitgestellt wird, mit der ortsabhängigen Aufenthaltswahrscheinlichkeit eingerichtet, welche von der a-priori Aufenthaltswahrscheinlichkeits-Bestimmungseinrichtung 103 geliefert wird. Außerdem weist die Auswerteeinrichtung 104 den Ausgang 109 auf, über den eine aus dem Überlagern ermittelte Position der Signalquelle 105 bereitgestellt wird.

Fig. 2 zeigt eine bildliche Darstellung einer ortsabhängigen Aufenthaltswahrscheinlichkeitsverteilung gemäß einem Ausführungsbeispiel.

In Fig. 2 ist eine Karte 200 mit Geo-Daten gezeigt. Es ist ein Flugfeld 201, eine Straße 202, ein Feuchtgebiet 203 und eine Befestigung 204 in dem Feuchtgebiet 203.

An der Lokalisierungsvorrichtung 100 oder dem RC 100 wird eine grobe Richtungspeilung oder Peilmessung vorgenommen, die einen Emitter (nicht dargestellt in Fig. 2) innerhalb des Empfangskegels 205 oder Peilkegels 205 vermuten lässt.

In einem Beispiel handelt es sich bei der Signalquelle 105 um einen Boden basierten Emitter, so dass mittels der Lokalisierungsvorrichtung 100 eine Boden basierte Emitter Lokalisierung (Ground Emitter Localisation) durchgeführt wird.

Aufgrund der Signalinformation in dem empfangenen Signal und/oder aufgrund der Missionsinformation konnte eine Typisierung vorgenommen werden, welche ein schweres Transportfahrzeug als Ursprung des Signals vermuten lässt. Insbesondere mag die Missionsaufgabe lauten ein schweres Transportfahrzeug aufzufinden.

Somit wird die Karte in Bereiche eingeteilt und die ortsabhängige Aufenthaltswahrscheinlichkeiten werden ermittelt. Für schwere Transportfahrzeuge kommen nur Bereiche auf dem Flugfeld 201, der Straße 202 und der Befestigung 204 in dem Feuchtgebiet 203 in Frage. Ein Gewicht und/oder eine Bodenbelastbarkeit können als Metainformation in der Karte 200 gespeichert sein.

Diese Informationen und/oder Metainformationen können als a-priori Informationen genutzt werden. Weitere mögliche a-priori Informationen sind eine Elevation und/oder Höhenlinien des Gebiets, Straßenkarten und/oder Points of Interest.

Die Wahrscheinlichkeit in dem Feuchtgebiet-Kegelabschnitt 206 des Empfangskegels 205, der innerhalb des Feuchtgebiets 203 aber außerhalb der Befestigung 204 und/oder der Straße 202 liegt, ein schweres Transportfahrzeug oder System aufzufinden erhält einen deutlich geringeren Wahrscheinlichkeitswert als die Wahrscheinlichkeit, dieses schwere Transportfahrzeug oder System in den Kegelabschnitten 207 außerhalb des Feuchtgebiets 203 aufzufinden. Zwar werden die Festland-Kegelabschnitte 207 des Empfangskegels 205, die außerhalb des Feuchtgebiets 203 liegen, insgesamt mit einer höheren Wahrscheinlichkeit bewertet als Bereiche innerhalb des Feuchtgebiet-Kegelabschnitts 206, jedoch ist die Wahrscheinlichkeit wiederum geringer als die Wahrscheinlichkeit auf dem Flugfeld 201, der Straße 202 und der Befestigung 204 in dem Feuchtgebiet 203.

Zusätzliche Informationen können noch genutzt werden, um zu einer weiteren Unterscheidung der Wahrscheinlichkeitsinformationen des Emitters zu kommen. Beispielsweise könnten Verkehrsdaten in der a-priori Aufenthaltswahrscheinlichkeits-Bestimmungseinrichtung 103 vorliegen, die angeben, dass die Straße 202 gesperrt ist. Durch die Nutzung der zusätzlichen Informationen mag sich ergeben, dass sich die Wahrscheinlichkeit für den Aufenthaltsort auf dem Flugfeld 201 und/oder auf der Befestigung 204 in dem Feuchtgebiet 203 erhöht. Die ermittelten Wahrscheinlichkeiten können in einer bildlichen ortsabhängigen Aufenthaltswahrscheinlichkeitsdarstellung 200 und/oder als eine bildliche ortsabhängige Aufenthaltswahrscheinlichkeitsverteilung 200 farblich codiert dargestellt werden. Hierbei kann mittels Data-Mining sämtliche Information kombiniert und/oder überlagert werden, die verfügbar ist, und eine gesamte Aufenthaltswahrscheinlichkeit ermittelt werden.

Die höchsten Wahrscheinlichkeitswerte ergeben sich somit aus der Überlagerung der Wahrscheinlichkeiten innerhalb des Peilkegels 205, der den Festland-Kegelabschnitts 207 und den Feuchtgebiet-Kegelabschnitt 206 aufweist, und dem Flugfeld 201, der Straße 202 und der Befestigung 204 in dem Feuchtgebiet 203.

Die überlagerte Befestigungs-Wahrscheinlichkeit 208 sei in dem Beispiel der Fig. 2 als höher als die überlagerte Straßen-Wahrscheinlichkeit 209 angenommen. Die überlagerte Straßen-Wahrscheinlichkeit 209 sei wiederum höher als die überlagerte Flugfeld-Wahrscheinlichkeit 210 angenommen.

In einem Beispiel können neben den a-priori Daten auch Echtzeit-Daten genutzt werden, welche während der Lokalisierung ermittelt werden. Als a-priori Daten kommen Gelände Informationen in Frage. So ist es für Fahrzeuge am wahrscheinlichsten, dass sie auf Tarmac Straßen bewegt werden und nicht über Seen und/oder unbefestigte Felder. Ferner können taktische Informationen in die a-priori Daten einfließen, sowie Aufklärungsdaten, wie bekannte SAM Basen, Satelliten-Bilder, HAPs (High-Altitude Pseudo-Satellite), RCs etc. Auch Flugkarten können genutzt werden. Bei den Wahrscheinlichkeiten mag es sich um bedingte Wahrscheinlichkeiten handeln.

Die Signalquellen 105, beispielsweise RF Emitter 105, können mittels der Nutzung der a-priori Information sehr schnell aufgefunden werden. Die Auffindzeit kann im Bereich weniger Sekunden liegen. Es lassen sich sehr hohe Erkennungsraten erreichen. Der Geschwindigkeitsgewinn mag sich ergeben, da durch die Nutzung der a-priori Daten bei der Auswertung von Peilsignalen weniger unbekannte Parameter bestimmt werden müssen und so die Aufklärungszeit und/oder Missionszeit verkürzt werden kann, insbesondere auch da Verarbeitungszeit gespart werden kann.

Die Rechenoperationen müssen sich lediglich auf die Bereiche konzentrieren, in denen eine hohe Auftretenswahrscheinlichkeit ermittelt wird.

Es besteht auch die Möglichkeit, in Bereichen mit hohen Wahrscheinlichkeiten gezielt nach Emittern zu suchen, auch wenn noch kein Signal aufgefangen wurde. Dazu könnten z.B. optische Sensoren genutzt werden.

Es könnte dann dort wo hohe a-priori Wahrscheinlichkeiten vorliegen mit einem Filter gesucht werden. Auch könnten beispielsweise Bereiche mit einer hohen Wahrscheinlichkeit mit anderen Sensoren, beispielsweise aktiven Sensoren wie optischen Sensoren, abgesucht werden, um beispielsweise Landmarken wie ein Flugfeld oder Missionsbereiche zu prüfen bevor der Emitter eingeschaltet wird und ein aktives Signal erzeugt. Die Peileinrichtung kann hierfür aktive und/oder passive Sensoren aufweisen. Mit einem aktiven Sensor, wie einem optischen Sensor könnte zunächst ein Gebiet mit einer hohen Auftrittswahrscheinlichkeit abgesucht werden, um eine Prioritätenliste zu erstellen, an welche Orte zuerst die Sensoren bewegt werden sollen, um mit den passiven Sensoren, wie einem Peilsensor eine Analyse durchzuführen.

Das Verfahren zum Lokalisieren einer Signalquelle 105 kann sich auf 2D-Szenarien und/oder auf 3D-Szenarien anwenden lassen.

Zum Überlagern der ortsabhängigen Peilmessung der Signalquelle mit der ortsabhängigen Aufenthaltswahrscheinlichkeit kann ein gitterbasiertes Filter bzw. Partikelfilter genutzt werden, das sämtliche ermittelten Wahrscheinlichkeiten zusammenführt. In dem Filter kann auch ein Data-Mining durchgeführt werden.

Mathematisch kann das Überlagern und/oder Zusammenführen von Wahrscheinlichkeiten als ein Multiplizieren von Wahrscheinlichkeiten betrachtet werden.

Aus der Emitter Bibliothek 106, welche den Typ des Emitters mit zugehörigen Daten speichert, beispielsweise aus der Emitter-Datenbank 106, kann eine Bedrohungsreichweite (Threat Range) a-priori abgeleitet werden.

Ein Beispiel für einen Emitter ist ein Nachführungs Radar für ein Kurzstrecken Raketensystem (Short Range Missile System). Von solch einem Radarsystem mag sich der Bedrohungsbereich (Threat Range) a-priori aus der Emitter-Datenbank 106 ableiten lassen. Innerhalb eines solchen Bedrohungsbereichs kann ein mit dem Emitter 105 assoziiertes System agieren. Es mag ferner bekannt sein, dass solch ein Radar System nur eingeschaltet wird, wenn sich eine Plattform, beispielsweise ein RC 100 und/oder eine Lokalisierungsvorrichtung 100 innerhalb des Bedrohungsbereichs *rₜₕᵣₑₐₜ* des Nachführungs-Radars befindet.

Somit wird der Emitter 105 im Wesentlichen nur eingeschaltet, wenn sich ein Objekt in dem im Wesentlichen kreisförmigen Bedrohungsbereich *rₜₕᵣₑₐₜ* um den Emitter 105 herum befindet. Daraus mag sich indirekt eine Schätzung der Entfernung des Objekts 100 und/oder eines Sensors zum Emitter 105 ableiten lassen, zumindest eine Maximalentfernung.

Wenn eine Aktivität eines solchen Emitters 105 erkannt wird, weil die Lokalisierungsvorrichtung 100 in den Bedrohungsbereichs *rₜₕᵣₑₐₜ* eingedrungen ist, ergibt sich die Bedrohungs-Aufenthalts-Wahrscheinlichkeit *Iₜₕᵣₑₐₜ*(*p̂*) des Positionsschätzwertes *p̂* = [*x, y*] für den Sensor 100 in dem Bedrohungsbereich als eine Wahrscheinlichkeitsfunktion, die für Positionen *p̂* = [*x, y*] innerhalb des Bedrohungsbereichs *rₜₕᵣₑₐₜ* eine hoch gewichtete Wahrscheinlichkeit aufweist und sonst eine niedrig gewichtete Wahrscheinlichkeit aufweist. Somit kann, falls ein bestimmter Emitter-Typ erkannt wird, der mit einem Bedrohungsbereich arbeitet, und wenn der Emitter 105 als aktiviert erkannt wird, eine hohe Wahrscheinlichkeit dafür angenommen werden, dass sich das Objekt 100 der Sensor 100 und/oder ein zugehöriger RC 100 in dem Bedrohungsbereich *rₜₕᵣₑₐₜ* des Emitters 105 befindet.

Ein Sensor 100 kann auf einem RC angebracht sein und als das Objekt 100 angesehen werden, welches in den Bedrohungsbereich *rₜₕᵣₑₐₜ* eindringt. Ein Schätzwert der Entfernung *r_{p̂}* des aktuellen Positionsschätzwertes *p̂ =* [*x, y*] des Sensors 100 für einen bestimmten geo Koordinaten-Wert x, y des Sensors 100 bis zu dem Emitter 105 kann als kleiner oder gleich wie der Bedrohungsbereich *rₜₕᵣₑₐₜ* angesehen werden, falls ein eingeschalteter Emitter 105 erkannt wird und liefert damit einen hohen Beitrag zu einer Aufenthaltswahrscheinlichkeitsbestimmung sowohl des Sensors 100 in Relation zum Emitter 105 als auch des Emitters 105.

Im Gegensatz dazu muss bei einem ausgeschalteten Emitter 105 und einer fehlenden Signalerkennung von einer nahezu unbekannten Entfernung zu dem Emitter 105 ausgegangen werden, was durch geringe Gewichtungsfaktoren zum Ausdruck gebracht werden kann.

In anderen Worten bedeutet das, dass lediglich Entfernungs-Schätzwerte *r_{p̂}*, welche sich in einen Bereich befinden, der kleiner als der Bedrohungsbereich *rₜₕᵣₑₐₜ* des Emitters 105 ist, der geortet werden soll, gültig sind. Alle anderen Schätzwerte werden durch einen geringen Gewichtungsfaktor derart herunter gewichtet, dass sie im Wesentlichen eliminiert werden.

Es kann somit durch die a-priori Information eine Plausibilitätsüberlegung angestellt werden. Denn durch das Wissen, dass das Signal nur auftauchen kann, wenn sich der Sensor 100 in dem Bedrohungsbereich *rₜₕᵣₑₐₜ* befindet, kann ausgeschlossen werden, dass wenn ein Emitter 105 in einer Entfernung größer als der Bedrohungsbereich als ein Nachführungs-Radar erkannt wird, eine fehlerhafte Schätzung vorliegt.

Anstatt von einem Bedrohungsbereich *rₜₕᵣₑₐₜ* um den Emitter 105 herum auszugehen kann auch von einem entsprechenden Bedrohungsbereich *rₜₕᵣₑₐₜ* um den Sensor 100 herum ausgegangen werden. Somit kann der Sensor 100, falls er das Einschalten des Emitters erkennt, davon ausgehen, dass sich der Emitter 105 in einem Bereich kleiner oder gleich dem Bedrohungsbereich *rₜₕᵣₑₐₜ* um den Sensor 100 herum befindet. Lediglich die Peilrichtung ist noch nicht bekannt.

Die Bedrohungs-Aufenthalts-Wahrscheinlichkeit *Iₜₕᵣₑₐₜ*(*p̂*) des Sensors 100 hat aufgrund der beiden Gültigkeitsbereiche, d.h innerhalb des Bedrohungsbereichs *rₜₕᵣₑₐₜ* und außerhalb des Bedrohungsbereichs *rₜₕᵣₑₐₜ* einen nichtlinearen Charakter. Sie beschreibt insbesondere einen Kreis um den Sensor 100 und/oder um den RC 100, die/der den entsprechenden Bedrohungs-Aufenthalts-Wahrscheinlichkeitswert *Iₜₕᵣₑₐₜ*(*p̂*) geliefert hat. Aufgrund des nichtlinearen Charakters kann solch eine Messmethode gut mittels eines Filters implementiert werden, beispielsweise eines Partikelfilters (PF, Particle Filter). Bei der Realisierung des Filters wird der Gewichtungsfaktor eines einzelnen Partikels mit der Bedrohungs-Aufenthalts-Wahrscheinlichkeit *Iₜₕᵣₑₐₜ*(*p̂*) multipliziert und Annahmen für eine Aufenthaltswahrscheinlichkeit innerhalb des Bedrohungsbereichs *rₜₕᵣₑₐₜ* bei eingeschaltetem Emitter 105 stärker gewichtet als außerhalb.

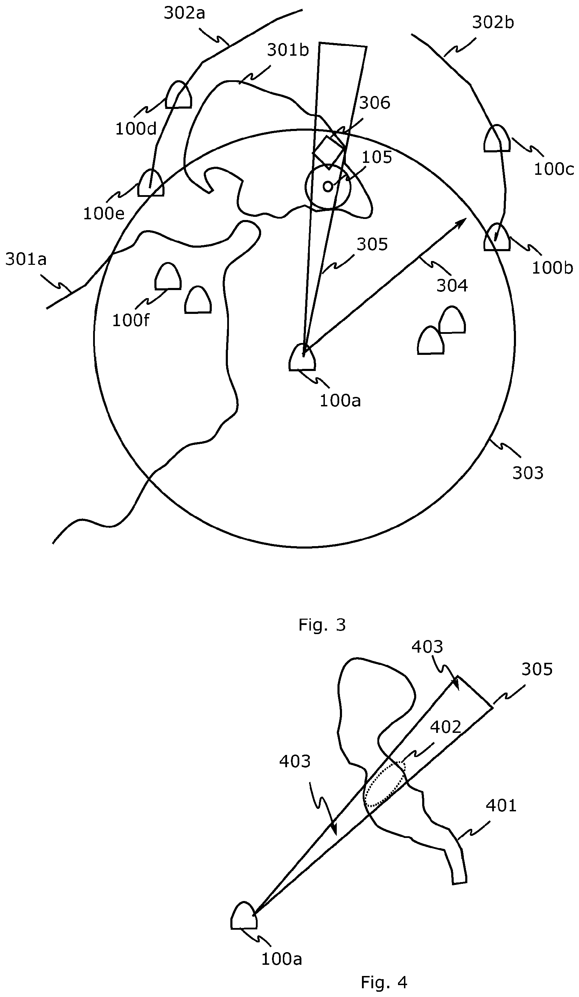

Die Fig. 3 zeigt die Wahrscheinlichkeitsverteilungsfunktion um eine Lokalisierungsvorrichtung 100a oder um einen RC 100a gemäß einem Ausführungsbeispiel.

Die Fig 3 zeigt eine Vielzahl von RCs mit zugehörigen Sensoren 100a, 100b, 100c, 100d, 100e, 100f, welche sich über einer Wasserfläche mit Festlandbereichen 301a, 301b entlang vorgebbaren Bahnen 302a, 302b bewegen. Die kreisförmige Wahrscheinlichkeitsverteilung ist in dem Kreis 303 mit dem Radius *rₜₕᵣₑₐₜ*304 ausgehend von dem Sensor 100a gegeben. Die Raute 306 oder das Quadrat 306 zeigt ein in der Nähe der Signalquelle 105 gelegenes System 306, beispielsweise eine SAM 306, von der aus beispielsweise Raketen und/oder Geschosse ausgehen können und welches mit der Signalquelle 105 assoziiert sein mag.

Der Sensor 100a hat eine Signalquelle 105 oder einen Emitter 105 innerhalb des Peilkegels 305 erfasst.

Zusätzlich zu der Peilmessung 305 und/oder der Typisierung der Signalquelle 105 kann im Falle eines Abschusses eines der Vielzahl von Sensoren 100a, 100b, 100c, 100d, 100e, 100f auch Information über die Abschussursache genutzt werden, um die ortsabhängige Aufenthaltswahrscheinlichkeit der Signalquelle zu bestimmen. Beispielsweise kann ermittelt werden, ob ein RC und/oder ein zugehöriger Sensor 100a, 100b, 100c, 100d, 100e, 100f durch eine Rakete oder eine AAA (Anti-Aircraft Artillery) Waffe angegriffen worden ist. Dabei wird die Attacke als Attacke erkannt und auch nach der Art der Attacke klassifiziert. Es kann beispielsweise davon ausgegangen werden, dass das System, welches die Attacke ausgeführt hat, in der Nähe des Emitters 105 lokalisiert ist.

Um die Attacke zu klassifizieren kann beispielsweise eine Bilderzeugungs-Vorrichtung, insbesondere eine Foto- und/oder Videokamera, genutzt werden. Das System, mit dem die Attacke ausgeführt worden ist, kann beispielsweise aus der Emitter Bibliothek und/oder der Datenbank 106 ermittelt werden.

Es kann also die Positionsschätzung *p̂* = [*x, y*] des Emitters 105 aktualisiert werden, indem die Abschuss-Aufenthalts-Wahrscheinlichkeitsfunktion *lₛₕₒₒₜ*(*p̂*) basierend auf der Reichweite (Weapon Engagement Zone, WEZ) oder Schussreichweite aktualisiert wird, da das attackierende System innerhalb des durch die Reichweite bestimmten Radius *r_{WEZ}* lokalisiert sein muss. Dieser Radius kann ähnlich wie der Bedrohungsbereich *rₜₕᵣₑₐₜ* beispielsweise in Abhängigkeit von dem erkannten System aus der Emitter Datenbank ermittelt werden.

Die Abschuss-Wahrscheinlichkeitsfunktion, welche die Wahrscheinlichkeit für den Abschuss angibt, ergibt sich als eine kreisförmige und nicht-lineare Funktion um den Emitter, 105. Solange der Schätzwert der Entfernung *r_{p̂}* von dem Emitter 105 zu dem Sensor 100a, 100b, 100c, 100d, 100e, 100f als kleiner als der durch die Reichweite, insbesondere die Schussreichweite, bestimmte Radius *r_{WEZ}* und/oder die Entfernung *r_{WEZ}* angenommen wird, ergibt sich eine hohe Wahrscheinlichkeit, falls ein Abschuss auch tatsächlich festgestellt worden ist.

Falls sich kein Abschuss feststellen lässt, mag sich nur eine schwache Aussage über die Aufenthaltswahrscheinlichkeit eines Sensors 100 und/oder eines Emitters 105 treffen lassen, was durch einen geringen Gewichtungsfaktor zum Ausdruck gebracht wird. Falls kein Abschuss festgestellt worden ist mag davon ausgegangen werden, dass sich der Sensor 100 außerhalb des durch die Reichweite bestimmte Radius *r_{WEZ}* befindet.

Die Gewichtungsfaktoren müssen hierbei und bei all den anderen Wahrscheinlichkeitsfunktionen nicht wie bei einer Wahrscheinlichkeitsfunktion üblich kleiner als der Wert 1 gewählt werden. Es ist auch nicht nötig, dass sich bei der Addition und/oder Überlagerung eine Summe von 1 ergibt. Die Gewichtungsfaktoren der Wahrscheinlichkeitsfunktionen sowie die Summe kann auch größer als 1 sein. Es wird durch die Gewichtungsfaktoren ein relatives Maß angegeben, welches die Verhältnisse der verschiedenen Aufenthaltswahrscheinlichkeiten zueinander ausdrückt.

Aufgrund der wiederum für zwei Bereiche definierten unterschiedlichen Wahrscheinlichkeiten, die im Wesentlichen dem Innenbereich und dem Außenbereich eines Kreises mit dem Radius *r_{WEZ}* um den Sensor100a, 100b, 100c, 100d, 100e, 100f entsprechen, welcher die entsprechende Messung, Typisierung und/oder Bilddaten liefert, kann mit Ausschlusskriterien gearbeitet werden, um zu einer gesamten Aufenthaltswahrscheinlichkeit zu kommen. Zur Implementierung der Positionsschätzung kann wiederum ein Filter genutzt werden, beispielsweise ein Partikelfilter (PF).

Ausgehend von dem in der Reichweite *r_{WEZ}* gelegenen und getroffenen Sensor 100a, 100b, 100c, 100d, 100e, 100f und der damit gewonnenen Information, dass der Sensor in der Reichweite *r_{WEZ}* war, kann entlang der Bahnen 302a, 302b basierend auf der dem Bedrohungsbereich *rₜₕᵣₑₐₜ* diejenige Bahn gesucht werden, die dem getroffenen RC am nächsten ist. Wenn diese Bahn dann gefunden und/oder berechnet ist, kann sie aufgrund des Abschussereignisses mit der Abschuss-Aufenthalts-Wahrscheinlichkeitsfunktion *lₛₕₒₒₜ*(*p̂*) aktualisiert werden. Dadurch mag sich die Aufenthaltswahrscheinlichkeit der Signalquelle 105 im Bereich der aufgefundenen Bahn erhöhen, wodurch sich die Information über den tatsächlichen Aufenthaltsort der Signalquelle 105 immer weiter einkreisen lässt. Die ortsabhängige Aufenthaltswahrscheinlichkeit kann so rekursiv immer genauer bestimmt werden.

Als eine weitere zusätzliche und/oder alternative Informationsquelle für die ortsabhängige Aufenthaltswahrscheinlichkeit können Geo-Informationen genutzt werden, wie in Fig. 4 dargestellt ist.

Die Fig. 4 zeigt eine Draufsicht auf einen Gebirgszug 401 und eine Lokalisierungsvorrichtung 100a gemäß einem Ausführungsbeispiel.

Für die Nutzung der Geo-Informationen mag beispielsweise die Information ausgewertet werden, dass Systeme, die mit der Signalquelle assoziiert sind, nur in bestimmten Höhenlagen eingesetzt werden. So mag ein SAM System bevorzugt in höheren Höhenlagen genutzt werden, wie beispielsweise auf Erhebungen und/oder Bergen.

Es kann dann in die Ermittlung der ortsabhängigen Aufenthaltswahrscheinlichkeit die Höheninformation mit einbezogen werden. So kann dann die Positionsschätzung und/oder die ortsabhängige Aufenthaltswahrscheinlichkeitsschätzung *p̂* = [*x, y*] eines Emitters 105 so berechnet werden, dass die Höhen basierte Aufenthalts-Wahrscheinlichkeitsfunktion *lₐₗₜ*(*p̂*) oder die Höhen- Aufenthalts-Wahrscheinlichkeitsfunktion *lₐₗₜ*(*p̂*) basierend auf der Höhe *h_{p̂}* der ortsabhängigen Aufenthaltswahrscheinlichkeitsschätzung *p̂* = [*x, y*] berechnet wird.

Die Höhen-Aufenthalts-Wahrscheinlichkeitsfunktion *lₐₗₜ*(*p̂*) mag eine Höhe *h_{p̂}* der Installation eines SAM Systems über der mittleren Erhebung *E*[*h*] des Geländeprofils h des Einsatzgebietes bestimmen. Mit einem Faktor, beispielsweise dem Höhengewichtungsfaktor m, kann angegeben werden, wie stark die Höhen über der mittleren Erhebung gegenüber sonstigen Höhen berücksichtigt werden sollen. Mittels eines Granularitätsfaktors *k* kann ein additiver Offset-Höhenfaktor, der die Granularität des Geländeprofils h angegeben kann, berücksichtigt werden. Der Faktor *k* mag zu der mittleren Erhebung *E*[*h*] hinzuaddiert werden und nur Höhenlagen eines Geländeprofils h, welche oberhalb der Summe *E[h] + k* liegen, mögen mit dem Faktor m gewichtet werden. Durch die Gewichtung mit dem Höhengewichtungsfaktor m werden diese oberhalb von *E[h] + k* gelegenen Höhen eines Geländeprofils als relevant für die Bestimmung einer Aufenthaltswahrscheinlichkeit herangezogen.

Nur Erhebungen ab dem mit *k* bezeichneten Faktor über der mittleren Erhebung *E*[*h*] kommt damit eine Bedeutung für die ortsabhängige Aufenthaltswahrscheinlichkeit zu. Durch das Verhältnis des Faktors m in Bezug auf einen Basiswert, beispielsweise 1, kann angegeben werden in welchem Verhältnis eine über der Höhe *E[h] + k* gelegene Landschaftsmarke oder ein entsprechendes Plateau gegenüber darunter liegenden Werten berücksichtigt wird und somit, wie stark die Höhe in die Berechnung der ortsabhängigen Aufenthaltswahrscheinlichkeit eingeht, insbesondere bei einer Überlagerung mehrerer Aufenthaltswahrscheinlichkeitsfunktionen.

Die Gewichtungsfaktoren, welche zur Ermittlung der Aufenthaltswahrscheinlichkeiten *Iₜₕᵣₑₐₜ*(*p̂*) *, lₛₕₒₒₜ*(*p̂*), *lₐₗₜ*(*p̂*) herangezogen werden, können von der Typisierung der Signalquelle 105 oder dem erkannten Emitter Typ abhängen. So kann der Höhengewichtungsfaktor m insbesondere bei dem Aufsuchen von SAM Systemen und deren zugehörigen Emittern 105 eine große Rolle spielen und somit einen hohen Wert aufweisen.

Die überlagerte höhenabhängige und/oder ortsabhängige Aufenthaltswahrscheinlichkeit 402 oder die Höhen-Aufenthalts-Wahrscheinlichkeitsfunktion *lₐₗₜ*(*p̂*), 402 kann auf einen ellipsenförmigen Bereich 402 über dem Gebirgszug 401 eingeschränkt werden, indem Informationen aus der Peilmessung 305 mit der Höhen-Aufenthalts-Wahrscheinlichkeitsfunktion *lₐₗₜ*(*p̂*) überlagert werden und die Höheninformationen mit in die Berechnung einfließen. Die Peilmessung 305 gibt dabei einen Bereich an, der aufgrund der empfangenen Signale eine Aufenthaltswahrscheinlichkeit ergibt. Dieser kann auf den ellipsenförmigen Bereich 402 verdichtet werden, in dem die Höhe des Gebirgszugs 401 eine Mindesthöhe überschreitet. Diese Mindesthöhe mag sich aus dem erkannten Emitter-Typ und insbesondere aus der Datenbank 106 ableiten lassen. In diesem Bereich 402 gilt *h_{p̂}* ≥ *E[h] + k.* Die Bereiche geringer Höhe 403 haben eine geringe Aufenthaltswahrscheinlichkeit.

Die Gewichtungsfaktoren können beispielsweise aus einer Emitter-Datenbank 106 ausgelesen werden, aus Konfigurationsdateien eingespielt werden oder über ein GUI (Graphical User Interface) eingegeben werden. Hierzu kann mittels Schalter 107 auf externe Quellen zugegriffen werden. Die Auswahl kann in Abhängigkeit von der Mission, der Umgebung, des Geländeprofils und/oder des Terrains erfolgen.

Als technische Implementierung für die Gewichtung und/oder die Überlagerung der Aufenthaltswahrscheinlichkeiten kann auch hier das Gitterpunkt- bzw. Partikelgewicht, also ein Gewichtungsfaktor für einen Gitterpunkt bzw. für ein Partikel, mit der Höhe an der Position eines jeden Partikels multipliziert werden. Dadurch würde das Gitterpunkt- bzw. das Partikelgewicht proportional mit der Höhe und/oder dem Wert der Erhebung ansteigen.

Mit diesem Ansatz könnte eine sanftere und flexiblere Wahrscheinlichkeitsfunktion erreicht werden. Eine sanfte Wahrscheinlichkeitsfunktion mag sich bei einer Kombination mehrerer Wahrscheinlichkeitsfunktionen ergeben.

Die Höhen-Aufenthalts-Wahrscheinlichkeitsfunktion *lₐₗₜ*(*p̂*) beschreibt die Wahrscheinlichkeit, dass ein bestimmter Emitter-Typ auf einer vorgebbaren Höhenlage vorkommt. Zusätzlich zu der Höhen-Aufenthalts-Wahrscheinlichkeit können auch andere a-priori Wahrscheinlichkeiten vorkommen, wie z.B. der Untergrund (z.B. Tarmac), die Nähe zu Straßen oder militärische Points of Interest. Wenn man diese Informationen mittels eines Partikel Filters fusioniert, ergibt sich eine Wahrscheinlichkeitsfunktion mit einem sanften Verlauf die im Wesentlichen alle fusionierten Informationen enthält. In anderen Worten ausgedrückt mag somit *lₐₗₜ*(*p̂*) ein Teil der sanften Wahrscheinlichkeitsfunktion sein, aber im Wesentlichen nur in Kombination mit anderen Wahrscheinlichkeitsfunktionen die sanfte Wahrscheinlichkeitsfunktion bilden.

Ebenso wie in der höhenabhängigen Aufenthalts-Wahrscheinlichkeitsfunktion *lₐₗₜ*(*p̂*) handelt es sich bei einer sanften Wahrscheinlichkeitsfunktion oder einer smooth Wahrscheinlichkeitsfunktion um eine nichtlineare Funktion. Insbesondere mag es sich bei der sanften Wahrscheinlichkeitsfunktion um eine multi-modale Funktion mit Spitzen im Bereich hochgelegener Punkte handeln. Diese Art von Funktion mag eingesetzt werden, wenn die Berechnung der Funktion mittels eines Partikelfilters erfolgt.

Eine Simulation, bei der die Signalquelle 105 oder der Emitter 105 auf einer Insel positioniert wird, welche eine höhere Erhebung als das umliegende Wasser aufweist, zeigt, dass bei Nutzung der Geo-Information der Landeserhebung der Emitter 105 schneller ermittelt werden kann als in einem Fall, in dem die Geo-Information nicht verwendet wird. In anderen Worten kann das Überlagern einer ortsabhängigen Peilmessung der Signalquelle 105 mit ortsabhängigen Aufenthaltswahrscheinlichkeiten *Iₜₕᵣₑₐₜ*(*p̂*) *, lₛₕₒₒₜ*(*p̂*), *lₐₗₜ*(*p̂*)*,* welche aus der TypErkennung abgeleitet werden, zu einer Erkennungszeit von wenigen Sekunden führen. Somit kann eine Vorgabe erfüllt werden, dass eine Position einer Signalquelle 105 mit einer sehr geringen Periodendauer bereitgestellt wird. Insbesondere dass die Position eines Emitters 105 von dem Sensor 100 erkannt wird, bevor die Position des Sensors 100 von dem Emitter 105 erkannt wird. Insbesondere kann durch die Nutzung von Geo-Informationen der Signalquelle 105 die erzielte Erkennungsgenauigkeit innerhalb eines vorgegebenen Erkennungszeitraums erhöht werden gegenüber einem Fall, in dem die Informationen nicht genutzt werden.

Bei dem Auffinden von einer Vielzahl von Signalquellen 105, kann der Einsatz von Typ basierten Aufenthaltswahrscheinlichkeiten zu einer Vereinfachung des Auffindens der Signalquelle 105 oder des Emitters 105 führen. Wenn es beispielsweise darum geht, drei Signalquellen 105 aufzufinden, wobei zwei an Land und eine auf dem Wasser positioniert sind, kann das Auswerten von Typ basierten Aufenthaltswahrscheinlichkeiten dazu beitragen, dass Fehllokalisierungen, sog. Ghost Tracks, vermieden werden.

Ist dabei noch die zusätzliche Information vorhanden, dass ein SAM System gesucht wird, kann der Emitter auf dem Wasser ausgeschlossen werden, da bekannt ist, dass ein SAM System nicht auf Meereshöhe, sondern nur oberhalb einer vorgebbaren Mindesthöhe betrieben wird.

Zum Auffinden der Position kann ein Zusammenspiel von Überlagern von Aufenthaltswahrscheinlichkeiten und Anwenden von Ausschlusskriterien erfolgen. Wobei das Überlagern durch hohe Gewichtungsfaktoren und ein Ausschlusskriterium durch geringe Gewichtungsfaktoren repräsentiert werden kann.

Bei der Betrachtung von ortsabhängigen Aufenthaltswahrscheinlichkeiten können insbesondere Informationen über Straßennetze einbezogen werden, vor allem wenn es darum geht, transportable Signalquellen 105 aufzusuchen. Sollte solch eine Signalquelle in einem schwer zugänglichen Gelände aufgefunden werden, wie einer hügeligen Landschaft oder anderem unbefestigtem Gelände, kann diese Auffindung mit einer hohen Wahrscheinlichkeit als ein Ghost-track ausgeschlossen werden.

Auch andere Points-of-Interest, Interessenspunkte oder Fokuspunkte können in die Bestimmung der ortsabhängigen Aufenthaltswahrscheinlichkeiten einbezogen werden, wie beispielsweise Flughäfen, Command-and-Control (C2) Station und/oder Fabriken. Ein Luftverteidigungssystem mag beispielsweise näher an verteidigungswürdigen Bauten aufzufinden sein, während SAM Systeme eher an Landesgrenzen aufzufinden sein werden.

Dieses Wissen über die Anordnung von Emittern 105 an bestimmten Geo-Koordinaten kann somit mittels der Auswahl einer bestimmten Aufenthaltswahrscheinlichkeitsfunktion *lₜₕᵣₑₐₜ*(*p̂*) *, lₛₕₒₒₜ*(*p̂*)*, lₐₗₜ*(*p̂*) und/oder Einstellung bestimmter Gewichtungsfaktoren umgesetzt werden. In einem Lernprozess können die Gewichtungsfaktoren mit jedem Durchlauf des Verfahrens entsprechend verfeinert werden und für die jeweilige Mission angepasst werden. Entsprechende Zuordnungen können in der Datenbank 106 gespeichert werden.

Auch die Morphologie des Geländes oder der Typ des Geländes kann in die ortsabhängige Aufenthaltswahrscheinlichkeit einbezogen werden. Beispielsweise, ob es sich bei dem Gelände in der Nähe der Signalquelle 105 um einen Wald, Land, Wasser oder ein Feld handelt. Die Geländebeschaffenheit kann auch einen Einfluss auf die Ausbreitung eines von der Signalquelle ausgesendeten Signals haben, woraus sich wieder Rückschlüsse auf den Standort der Signalquelle 105 ziehen lassen können. Ebenso kann die aktuelle Wetterlage herangezogen werden.

Solche Informationen können zumindest teilweise über eine entsprechende Auswahl mittels Schalter 107 von extern eingespielt werden. So können die Informationen auf den einzelnen Lokalisierungsvorrichtungen oder RCs 100a, 100b, 100c, 100d, 100e, 100f gespeichert werden und müssen nicht extra berechnet werden. Sie können auch durch Mittel der Datenübertragung auf die jeweiligen Vorrichtungen übertragen werden und von einer Zentrale berechnet bzw. bereitgestellt werden. Hierzu mögen einzelne RCs 100a, 100b, 100c, 100d, 100e, 100f beispielsweise über Funk- oder Laserverbindungen miteinander in Kontakt stehen.

Die Ortsabhängigkeit der Peilung und/oder der Aufenthaltswahrscheinlichkeit kann dafür sorgen, dass sich die genutzten Informationen auf ein einheitliches Bezugssystem beziehen. Die Ortsabhängigkeit kann durch die Angabe von Geo-Koordinaten oder Längen- und/oder Breitengradangaben in den verschiedenen Maßsystemen angegeben werden, beispielsweise Gauß-Krüger oder UTM (Universal Transverse Mercator).

Die ortsabhängigen Aufenthaltswahrscheinlichkeiten *lₜₕᵣₑₐₜ*(*p̂*) *, lₛₕₒₒₜ*(*p̂*), *lₐₗₜ*(*p̂*), können von unterschiedlichen Erfassungseinrichtungen bereitgestellt werden, beispielsweise von Satelliten, Joint Surveillance and Target Attack Radar System (JSTARS) Flugzeugen, von Flugzeugen die mit einem Ground Target Moving Indication (GMTI) Radar ausgestattet sind, von lokalen Einsatzkräften, aus Verkehrsstrombeobachtungen, aus Berichten von taktischen Piloten, aus für den Tiefflug genutzten Karten, aus Seekarten und/oder aus Straßenkarten.

Die verschiedenen Informationsquellen können in Abhängigkeit des erkannten Typs der Signalquelle unterschiedlich gewichtet werden. Bei einem SAM System kann beispielsweise die Höhenlage von einer hohen Bedeutung sein, während für ein transportables System der Information über das Straßennetz und/oder den Straßenbelag eine hohe Bedeutung zukommt.

Die ortsabhängigen Aufenthaltswahrscheinlichkeiten können in mindestens drei Gruppen eingeteilt werden. Sie können in eine von dem Bedrohungsbereich abhängige Wahrscheinlichkeit *lₜₕᵣₑₐₜ*(*p̂*), in eine Wahrscheinlichkeit, die die Reichweite *lₛₕₒₒₜ*(*p̂*) bei einem tatsächlichen Abschuss berücksichtigt und in eine Höhen basierte Wahrscheinlichkeit *lₐₗₜ*(*p̂*) eingeteilt werden. Bei all diesen Wahrscheinlichkeiten mag der Typ der Signalquelle 105 ausgewertet werden, um die richtige Gruppe der Aufenthaltswahrscheinlichkeitsfunktion und/oder deren Kombination und/oder deren Gewichtungen einzustellen.

Hierbei kann insbesondere die Auswertung der Erhebung des Geländes und somit die Höhen basierte Wahrscheinlichkeit *lₐₗₜ*(*p̂*) zu einer schnellen Auffindung der Signalquelle 105 und der Vermeidung von Ghost Tracks und Fehlerkennungen beitragen.

Das Bestimmen der ortsabhängigen Peilmessung der Signalquelle 105 und das Ermitteln der ortsabhängigen Aufenthaltswahrscheinlichkeit mag in einer Schleife ausgeführt werden, wobei immer wieder neue Erkenntnisse entweder von extern oder über die Typerkennung mittels der Auswahleinrichtung 107 zugeführt werden und zu immer neuen Wahrscheinlichkeiten verdichtet werden. In anderen Worten mag der Partikelfilter (PF) in einer Wiederholungsschleife und/oder Feedbackschleife mit immer geänderten Wahrscheinlichkeiten versorgt werden, die dem aktuellen Erkenntnisstand entsprechen.

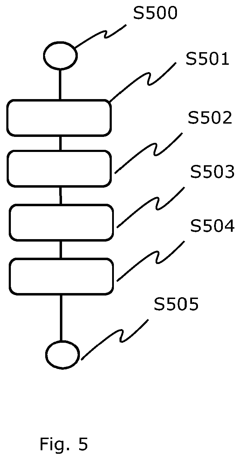

Fig. 5 zeigt ein Flussdiagramm für ein Verfahren zum Lokalisieren einer Signalquelle gemäß einem Ausführungsbeispiel.

Die Signalquelle 105 sendet ein Signal aus, beispielsweise eine elektromagnetische Welle.

Das Verfahren beginnt im Zustand S500. Im Zustand S501 wird eine ortsabhängige Peilmessung der Signalquelle 105 ausgeführt.

Im Zustand S502 erfolgt das Empfangen einer Typisierung der Signalquelle, wobei die Typisierung auch aus der empfangenen Signalquelle 105 abgeleitet werden kann. Im Zustand S503 wird eine ortsabhängigen Aufenthaltswahrscheinlichkeit der Signalquelle 105 in Abhängigkeit von der empfangenen Typisierung der Signalquelle 105 ermittelt und die ortsabhängige Peilmessung der Signalquelle 105 mit der ortsabhängigen Aufenthaltswahrscheinlichkeit überlagert.

Im Zustand S504 wird die aus dem Überlagern ermittelte Position der Signalquelle 105 bereitgestellt.

Im Zustand S505 endet das Verfahren, wobei in einer Ausführungsform auch das wiederholte Ausführen des Verfahrens, mit zumindest teilweise neuen Informationen vorgesehen sein kann.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100, 100a, 100b, 100c, 100d, 100e, 100f: Lokalisierungsvorrichtung
- 101: Peileinrichtung
- 101a: Antenne
- 102: Typisiereinrichtung,
- 103: a-priori Aufenthaltswahrscheinlichkeits-Bestimmungseinrichtung
- 104: Auswerteeinrichtung
- 105: Signalquelle
- 106: Datenbank
- 107: Schalter
- 108: Verbindung zum Übertragen der Ergebnisse der Peilmessung
- 109: Ausgang

- 200: Karte
- 201: Flugfeld,
- 202: Straße
- 203: Feuchtgebiet
- 204: Befestigung
- 205: Empfangskegel
- 206: Feuchtgebiet-Kegelabschnitt
- 207: Festland-Kegelabschnitte
- 208: überlagerte Befestigungs-Wahrscheinlichkeit
- 209: überlagerte Straßen-Wahrscheinlichkeit
- 210: überlagerte Flugfeld-Wahrscheinlichkeit

- 301a, 301b: Festlandbereiche
- 302a, 302b: Bahnen
- 303: Kreis
- 304: Radius *rₜₕᵣₑₐₜ*
- 305: Peilkegel
- 306: System, welches mit der Signalquelle assoziiert ist

- 401: Gebirgszug
- 402: Bereiche großer Höhe innerhalb des Peilkegels
- 403: Bereiche geringer Höhe innerhalb des Peilkegels

- S500 - S505: Zustände des Verfahrens

## Patentansprüche

1. Verfahren zum Lokalisieren einer Signalquelle (105), welche ein Signal aussendet, aufweisend:
Bestimmen einer ortsabhängigen Peilmessung (305) der Signalquelle (105);
Bestimmen einer Typisierung der Signalquelle (105) durch Auswerten eines von der Signalquelle (105) empfangenen Signals und Zuordnen des empfangenen Signals zu einem bestimmten Emitter-Typ aufgrund von Signalinformationen des empfangenen Signals, wobei die Typisierung einen Typ der Signalquelle (105) angibt;
Ermitteln einer ortsabhängigen Aufenthaltswahrscheinlichkeit (*lₜₕᵣₑₐₜ*(*p̂*) , *lₛₕₒₒₜ*(*p̂*), *lₐₗₜ*(*p̂*)) der Signalquelle (105) in Abhängigkeit von der bestimmten Typisierung der Signalquelle (105);
Überlagern der ortsabhängigen Peilmessung (305) der Signalquelle (105) mit der ortsabhängigen Aufenthaltswahrscheinlichkeit (*lₜₕᵣₑₐₜ*(*p̂*) *, lₛₕₒₒₜ*(*p̂*)*, lₐₗₜ*(*p̂*));
Bereitstellen einer aus dem Überlagern ermittelten Position der Signalquelle (105).

2. Verfahren nach Anspruch 1, wobei das Ermitteln einer ortsabhängigen Aufenthaltswahrscheinlichkeit (*lₜₕᵣₑₐₜ*(*p̂*), *lₛₕₒₒₜ*(*p̂*), *lₐₗₜ*(*p̂*)) in Abhängigkeit von der bestimmten Typisierung der Signalquelle (105) zumindest ein a-priori Ermittlungsverfahren aufweist ausgewählt aus der Gruppe von a-priori Ermittlungsverfahren, bestehend aus:
- Auslesen einer Metainformation;
- Auswerten einer Geo-Information;
- Bereitstellen einer typisierten Landkarte;
- Ermitteln von Points of Interests;
- Auswerten von Bilddaten;
- Auswerten von Bewegungsdaten;
- Anwenden von Methoden der Bildverarbeitung;
- Anwenden einer Datenfusion; und
- Auswerten von Ausbreitungsbedingungen des Signals.

3. Verfahren nach Anspruch 1 oder 2, wobei das Bestimmen einer Typisierung der Signalquelle (105) das Auswerten einer Emitter-Datenbank (106) aufweist.

4. Verfahren nach einem der Ansprüche 1 bis 3, wobei die ortsabhängige Peilmessung (305) das Anwenden eines Peilverfahrens aufweist, ausgewählt aus der Gruppe von Peilverfahren bestehend aus:
- einem Time of Arrival (TOA) Verfahren;
- einem Angle of Arrival (AOA) Verfahren; und
- einem Received Signal Strength (RSS) Verfahren.

5. Verfahren nach einem der Ansprüche 1 bis 4, wobei Ergebnisse der ortsabhängigen Peilmessung (305), Ergebnisse der Ermittlung der ortsabhängigen Aufenthaltswahrscheinlichkeit (*lₜₕᵣₑₐₜ*(*p̂*), *lₛₕₒₒₜ*(*p̂*), *lₐₗₜ*(*p̂*)) der Signalquelle und/oder die ermittelte Position versendet und/oder empfangen werden/wird.

6. Verfahren nach einem der Ansprüche 1 bis 5, wobei das Bestimmen einer ortsabhängigen Peilmessung (305), das Bestimmen der Typisierung der Signalquelle (105) und das Ermitteln der ortsabhängigen Aufenthaltswahrscheinlichkeit (*lₜₕᵣₑₐₜ*(*p̂*), *lₛₕₒₒₜ*(*p̂*), *lₐₗₜ*(*p̂*)) der Signalquelle während einer Bewegung stattfindet.

7. Verfahren nach einem der Ansprüche 1 bis 6, wobei das Verfahren in einer Wiederholungsschleife unter Verwendung vorausgehender Ergebnisse ausgeführt wird.

8. Programmelement, welches, wenn es von einem Prozessor ausgeführt wird, das Verfahren zum Lokalisieren einer Signalquelle nach einem der Ansprüche 1 bis 7 ausführt.

9. Lokalisierungsvorrichtung (100, 100a, 100b) zum Lokalisieren einer Signalquelle (105), aufweisend:
eine Peileinrichtung (101),
eine Typisiereinrichtung (102);
eine a-priori Aufenthaltswahrscheinlichkeits-Bestimmungseinrichtung (103);
eine Auswerteeinrichtung (104);
wobei die Peileinrichtung (101) zum Bestimmen einer ortsabhängigen Peilmessung einer Signalquelle (105) eingerichtet ist;
wobei die Typisiereinrichtung (102) zum Bestimmen einer Typisierung der Signalquelle (105) durch Auswerten eines von der Signalquelle (105) empfangenen Signals und Zuordnen des empfangenen Signals zu einem bestimmten Emitter-Typ aufgrund von Signalinformationen des empfangenen Signals eingerichtet ist, wobei die Typisierung einen Typ der Signalquelle (105) angibt;
wobei die a-priori Aufenthaltswahrscheinlichkeits-Bestimmungseinrichtung (103) zum Ermitteln einer ortsabhängigen Aufenthaltswahrscheinlichkeit (*lₜₕᵣₑₐₜ*(*p̂*), *lₛₕₒₒₜ*(*p̂*), *lₐₗₜ*(*p̂*)) der Signalquelle in Abhängigkeit von der bestimmten Typisierung der Signalquelle (105) eingerichtet ist;
wobei die Auswerteeinrichtung (104) zum Überlagern der ortsabhängigen Peilmessung (305) der Signalquelle (105) mit der ortsabhängigen Aufenthaltswahrscheinlichkeit (*lₜₕᵣₑₐₜ*(*p̂*), *lₛₕₒₒₜ*(*p̂*), *lₐₗₜ*(*p̂*)); und
zum Bereitstellen einer aus dem Überlagern ermittelten Position der Signalquelle eingerichtet ist.

10. Transportmittel mit einer Lokalisierungsvorrichtung (100, 100a, 100b) nach Anspruch 9.

## Claims

1. A method for locating a signal source (105) that transmits a signal, comprising:
Determining a location-dependent direction-finding measurement (305) of the signal source (105);
Determining a classification of the signal source (105) by evaluating a signal received from the signal source (105) and assigning the received signal to a determined emitter type based on signal information of the received signal, wherein the classification indicates a type of the signal source (105);
Estimating a location-dependent probability of presence (*lₜₕᵣₑₐₜ*(*p̂*) *,lₛₕₒₒₜ*(*p̂*) *,lₐₗₜ*(*p̂*) ) of the signal source (105) based on the determined classification of the signal source (105);
Superimposing the location-dependent direction-finding measurement (305) of the signal source (105) with the location-dependent probability of presence (*lₜₕᵣₑₐₜ*(*p̂*) *,lₛₕₒₒₜ*(*p̂*) *,lₐₗₜ*(*p̂*) );
providing a position of the signal source (105) estimated from the superposition.

2. Method according to claim 1, wherein the estimation of a location-dependent probability of presence (*lₜₕᵣₑₐₜ*(*p̂*) *,lₛₕₒₒₜ*(*p̂*) *,lₐₗₜ*(*p̂*) ) as a function of the determined classification of the signal source (105) comprises at least one a priori estimation method selected from the group of a priori estimation methods consisting of:
- reading out metadata;
- evaluating geographic information;
- providing a categorized map;
- Estimating points of interest;
- Evaluating image data;
- Analyzing motion data;
- Applying image processing methods;
- Applying data fusion; and
- Evaluating signal propagation conditions.

3. A method according to claim 1 or 2, wherein Determining a classification of the signal source (105) comprises evaluating an emitter database (106).

4. A method according to any one of claims 1 to 3, wherein the location-dependent direction-finding measurement (305) comprises applying a direction-finding method selected from the group of direction-finding methods consisting of:
- a Time of Arrival (TOA) method;
- an Angle of Arrival (AOA) method; and
- a Received Signal Strength (RSS) method.

5. A method according to any one of claims 1 to 4, wherein results of the location-dependent direction-finding measurement (305), results of the estimation of the location-dependent probability of presence (*lₜₕᵣₑₐₜ*(*p̂*) *,lₛₕₒₒₜ*(*p̂*) *lₐₗₜ*(*p̂*) ) of the signal source, and/or the estimated position are transmitted and/or received.

6. A method according to any one of claims 1 to 5, wherein the determination of a location-dependent direction-finding measurement (305), the determination of the classification of the signal source (105), and the estimation of the location-dependent probability of presence (*lₜₕᵣₑₐₜ*(*p̂*) *,lₛₕₒₒₜ*(*p̂*) *,lₐₗₜ*(*p̂*) ) of the signal source take place during movement.

7. A method according to any one of claims 1 through 6, wherein the method is executed in an iterative loop using previous results.

8. A program element which, when executed by a processor, performs the method for locating a signal source according to any one of claims 1 to 7.

9. A localization device (100, 100a, 100b) for localizing a signal source (105), comprising:
a direction-finding device (101),
a classification means (102);
an a-priori presence probability determination means (103);
an evaluation device (104);
wherein the direction-finding device (101) is configured to determine a location-dependent direction-finding measurement of a signal source (105);
wherein the classification means (102) is configured to determine a classification of the signal source (105) by evaluating a signal received from the signal source (105) and assigning the received signal to a determined emitter type based on signal information of the received signal, wherein the classification indicates a type of the signal source (105);
wherein the a-priori presence probability determination means (103) is configured to estimate a location-dependent probability of presence (*lₜₕᵣₑₐₜ*(*p̂*) *,lₛₕₒₒₜ*(*p̂*) *,lₐₗₜ*(*p̂*) ) of the signal source as a function of the determined classification of the signal source (105);
wherein the evaluation device (104) is configured to superimpose the location-dependent direction-finding measurement (305) of the signal source (105) with the location-dependent probability of presence (*lₜₕᵣₑₐₜ*(*p̂*) *,lₛₕₒₒₜ*(*p̂*) *,lₐₗₜ*(*p̂*) ); and
for providing a position of the signal source estimated from the superposition.

10. A vehicle comprising a localization device (100, 100a, 100b) according to claim 9.

## Revendications

1. Procédé de repérage d'une source de signal (105) émettant un signal, comprenant:
Détermination d'une mesure de relèvement en fonction de la position (305) de la source de signal (105);
Détermination d'un typage de la source de signal (105) par l'analyse d'un signal reçu de la source de signal (105) et l'attribution de signal reçu à un type d'émetteur déterminé sur la base d'informations de signal de signal reçu, le typage indiquant un type de la source de signal (105);
Estimation d'une probabilité de présence (*lₜₕᵣₑₐₜ*(*p̂*) *,lₛₕₒₒₜ*(*p̂*) *lₐₗₜ*(*p̂*) ) de la source de signal (105) en fonction de le typage déterminée de la source de signal (105);
Superposition de la mesure de relèvement en fonction de la position (305) de la source de signal (105) avec la probabilité de présence (*lₜₕᵣₑₐₜ*(*p̂*) *,lₛₕₒₒₜ*(*p̂*) *lₐₗₜ*(*p̂*) ) en fonction de la localisation;
Fournir une position de la source de signal (105) estimée à partir de la superposition.

2. Procédé selon la revendication 1, dans lequel l'Estimation d'une probabilité de présence en fonction de l'emplacement (*lₜₕᵣₑₐₜ*(*p̂*) *,lₛₕₒₒₜ*(*p̂*) *,lₐₗₜ*(*p̂*) ) en fonction de la typologie déterminée de la source de signal (105) comprend au moins un procédé d'estimation a priori choisi parmi le groupe de procédés d'estimation a priori comprenant:
- la lecture d'une méta-information;
- l'analyse d'informations géographiques;
- la mise à disposition d'une carte géographique typée;
- Estimation de points d'intérêt;
- l'analyse de données d'images;
- Analyse de données de mouvement;
- Application de méthodes de traitement d'images;
- Application d'une fusion de données; et
- Évaluation des conditions de propagation de signal.

3. Procédé selon la revendication 1 ou 2, dans lequel Détermination d'un typage de la source de signal (105) comprend l'analyse d'une base de données d'émetteurs (106).

4. Procédé selon l'une des revendications 1 à 3, dans lequel la mesure de relèvement en fonction de la localisation (305) comprend l'application d'un procédé de relèvement choisi parmi le groupe de procédés de relèvement comprenant:
- un procédé de temps d'arrivée (TOA);
- un procédé d'angle d'arrivée (AOA); et
- un procédé d'intensité de signal reçu (RSS).

5. Procédé selon l'une des revendications 1 à 4, dans lequel les résultats de la mesure de relèvement en fonction de la localisation (305), les résultats d'Estimation de la probabilité de présence en fonction de la localisation (*lₜₕᵣₑₐₜ*(*p̂*) *,lₛₕₒₒₜ*(*p̂*) *lₐₗₜ*(*p̂*) ) de la source de signal et/ou la position estimée sont envoyés et/ou reçus.

6. Procédé selon l'une des revendications 1 à 5, dans lequel Détermination d'une mesure de relèvement en fonction de la localisation (305), Détermination de la typologie de la source de signal (105) et Estimation de la probabilité de présence en fonction de la localisation (*lₜₕᵣₑₐₜ*(*p̂*) *,lₛₕₒₒₜ*(*p̂*) *,lₐₗₜ*(*p̂*) ) de la source de signal ont lieu pendant un déplacement.

7. Procédé selon l'une des revendications 1 à 6, dans lequel le procédé est exécuté dans une boucle itérative en utilisant les résultats précédents.

8. Élément de programme qui, lorsqu'il est exécuté par un processeur, met en œuvre le procédé de repérage d'une source de signal selon l'une des revendications 1 à 7.

9. Dispositif de repérage (100, 100a, 100b) de repérage d'une source de signal (105), comprenant:
un dispositif de radiogoniométrie (101),
un dispositif de typage (102);
un dispositif de détermination de la probabilité de présence a priori (103);
un dispositif d'évaluation (104);
le dispositif de radiogoniométrie (101) étant conçu pour déterminer une mesure de radiogoniométrie dépendante de la position d'une source de signal (105);
le dispositif de typage (102) étant agencé pour déterminer un typage de la source de signal (105) en évaluant un signal reçu de la source de signal (105) et en attribuant le signal reçu à un type d'émetteur déterminé sur la base d'informations de signal de signal reçu, le typage indiquant un type de la source de signal (105);
le dispositif de détermination de la probabilité de présence a priori (103) étant agencé pour estimer une probabilité de présence dépendante de la localisation (*lₜₕᵣₑₐₜ*(*p̂*) *,lₛₕₒₒₜ*(*p̂*) *lₐₗₜ*(*p̂*) ) de la source de signal en fonction de la typologie déterminée de la source de signal (105);
le dispositif d'évaluation (104) étant agencé pour superposer la mesure de relèvement en fonction de la position (305) de la source de signal (105), qui dépend de la localisation, à la probabilité de présence (*lₜₕᵣₑₐₜ*(*p̂*) *,lₛₕₒₒₜ*(*p̂*) *,lₐₗₜ*(*p̂*) ) qui dépend de la localisation; et
est conçu pour fournir une position de la source de signal estimée à partir de la superposition.

10. Moyen de transport comportant un dispositif de repérage (100, 100a, 100b) selon la revendication 9.
